# EUROPEAN PATENT SPECIFICATION

(11) **EP 0 697 689 B1**
(45) Date of publication and mention of the grant of the patent: **12.09.2001**
(21) Application number: 95305410.3
(22) Date of filing: 02.08.1995
(51) Int. Cl.: G09G 1/16, G06F 3/033, H03J 1/00, H03J 9/00

(54) **Integrated computer and television with remote control of cursor position**
Integriertes Rechner- und Fernsehsystem mit Fernsteuerung zur Cursorpositionierung
Ordinateur et télévision intégrés avec télécommande à distance de la position du curseur

(30) Priority: 11.08.1994 GB 9416208; 11.08.1994 GB 9416207; 11.08.1994 GB 9416269
(43) Date of publication of application: 21.02.1996
(73) Proprietor: INTERNATIONAL COMPUTERS LIMITED, Putney, London, SW15 1SW (GB)
(72) Inventor: Liu, Man Cheung, Wokingham, Berkshire RG11 4PQ (GB); Burton, Sidney, Reading, Berkshire (GB)
(74) Representative: Guyatt, Derek Charles

(56) References cited:
- EP-A- 0 314 177
- EP-A- 0 492 795
- EP-A- 0 596 594
- GB-A- 2 131 221
- GB-A- 2 223 143
- US-A- 5 192 999
- IBM TECHNICAL DISCLOSURE BULLETIN, vol. 35, no. 3, August 1992, NEW YORK US, pages 277-278, XP002003870 "auto ranging hand control unit for multi-media viewing"
- NEC TECHNICAL JOURNAL, vol. 40, no. 3, March 1987, JAPAN, pages 126-138, XP002003871 SUNADA ET AL.: "auto-scan 21-inch TV receiver model PC-TV471/C-21M729"
- NEC TECHNICAL JOURNAL, vol. 38, no. 5, May 1985, JAPAN, pages 101-113, XP002003872 INOUE ET AL.: "TV-Personal computer Mr. PC"
- NEC TECHNICAL JOURNAL, vol. 40, no. 3, March 1987, JAPAN, pages 139-144, XP002003873 SUNADA ET AL.: "dual scan 15" display TV receiver model PC-TV352"
- NEC TECHNICAL JOURNAL, vol. 38, no. 8, August 1985, JAPAN, pages 88-95, XP002003874 SUNADA ET AL: "15-inch color display television receiver model PC-TV351"

## Description

### Background to the invention

This invention relates to an integrated computer and television system.

US patent No. 5192999 describes a computerized television in which a television (TV) circuit is housed within the same chassis as a personal computer (PC). A key signal (KEY0/) from the computer controls whether a multiplexer will direct television or computer output to a VGA monitor. A hand-held remote control unit is used to control both the TV circuit and the PC.

European Patent No. 596594 describes a multimedia system including a computer having a control device. Normally, the control device acts as an optical mouse. The control device can also be used as a remote control for a number of separate target devices: in this case, the user points the bottom end of control device at the selected target device, and the computer generates signals for transmission to the target device.

The object of the invention is to provide an improved integrated TV and PC system.

### Summary of the invention

According to the invention there is provided an integrated computer and television system as claimed in Claim 1.

It can be seen that the invention provides a novel "simulated mouse" feature, in which a remote controller can be used either to control television circuits, or to control the position of a cursor in place of a conventional mouse or other pointer device.

### Brief description of the drawings

Figure 1 is an overall block circuit diagram of an integrated computer and television system.

Figure 2 is a block diagram of a slot card forming part of the system.

Figure 3 is a block diagram of a TV card forming part of the system.

### Description of an embodiment of the invention

One embodiment of the invention will now be described by way of example with reference to the accompanying drawings.

As will be described, the embodiment of the invention comprises an integrated multimedia PC (personal computer) and TV (television), housed in a single desktop cabinet, with a VGA (video graphics adaptor) monitor. The system has two modes of operation, referred to as TV mode and PC mode. An IR (infrared) remote control unit is provided; this has the conventional TV control keys, and in addition has mode control keys, for switching the system between the two modes. In TV mode, a TV picture is displayed on the VGA monitor, and the remote control unit provides the normal TV control functions. Alternatively, the TV can be controlled by signals from the PC, which simulate the IR signals from the remote controller. In PC mode, the VGA monitor displays the computer output, and in this mode the remote control unit can be used as a remote pointing device, instead of the conventional mouse or other pointer device.

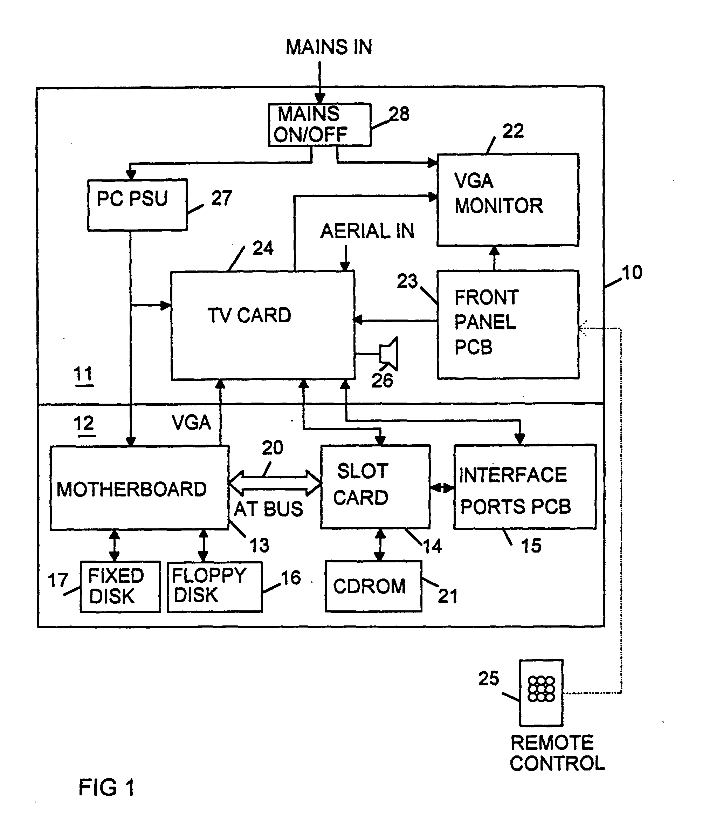

Referring to Figure 1, the system comprises a single desktop cabinet 10, including two compartments: a TV compartment 11, and a PC compartment 12. The two compartments are screened from each other, thereby reducing interference between TV and PC circuits in these compartments.

The PC compartment 12 holds a PC motherboard 13, a slot card 14, and an interface ports PCB (printed circuit board) 15.

In this example, the PC motherboard 13 comprises the following:
- 486SX processor running at 33MHz;
- 4 MBytes RAM (random access memory);
- VESA local bus VGA with 1 MByte of VGA RAM;
- a floppy disk interface connected to a 1.44 MByte 3½" floppy disk drive unit 16;
- a fixed disk interface, connected to a 210 MByte IDE fixed disk drive unit 17;
- mouse and keyboard input ports;
- a parallel AT bus port connected to an AT bus 20.

The slot card 14 plugs into the PC motherboard, at right angles to the motherboard, and provides three ISA expansion slots for plugging in expansion PCBs, if required. The slot card also includes a sound processor circuit, a control interface, and a CD ROM interface, connected to a CD ROM drive 21. The slot card will be described in detail later.

The interface ports PCB 15 plugs into the slot card. MIDI (Musical instrument digital interface), joystick, microphone and headphone connectors are mounted on this card.

The TV compartment 11 houses a VGA monitor 22, a front panel PCB 23 and a TV card 24.

The monitor 22 is a conventional VGA monitor with digital control circuits for brightness, contrast and picture size. It is capable of displaying all VGA modes up to 1024X768 non-interlaced, and in addition supports a TV mode capable of displaying both 625 line/50 Hz (PAL) and 525 line/60 Hz (NTSC) television pictures.

The front panel PCB 23 includes conventional TV control buttons (channel up, channel down, volume up, volume down, program, and store). The TV control signals are fed to the TV card 24. These buttons can also be used as VGA control buttons for controlling the geometry adjustment of the VGA monitor (VGA mode, VGA up, and VGA down). The VGA control signals are fed directly to the VGA monitor 22. The front panel also includes an infrared (IR) receiver, for receiving IR signals from a hand-held remote control unit 25. The IR receiver outputs a remote control signal IRin, which is fed to the slot card 14 and to the TV card 24.

The hand-held remote control unit 25 has conventional keys, including the following:
- numeric keys (numbered 0-9) for channel selection,
- "red", "green", "blue" and "yellow" keys for teletext functions, - picture controls (brightness, contrast, colour),
- sound controls (volume, balance, treble, bass), and
- mute and standby controls.

In addition, the remote control unit has TV and PC keys which can be used for switching the system between the TV mode and the PC mode, as will be described.

The TV card 24 includes a stereo audio power amplifier, TV tuner, IF and decoder circuits, a teletext circuit, and a TV microcontroller. The output of the audio amplifier is fed to internal loudspeakers 26. The TV card also includes a multiplexing circuit, for selecting between the PC VGA signal and the TV signal. The TV card will be described in detail later.

The TV compartment 11 also houses a PC power supply unit 27, for supplying power to the PC compartment, and to the audio amplifier in the TV card. The other circuits in the TV compartment are powered by the PSU in the VGA monitor 22. Both of these PSUs are controlled by a mains on/off switch 28.

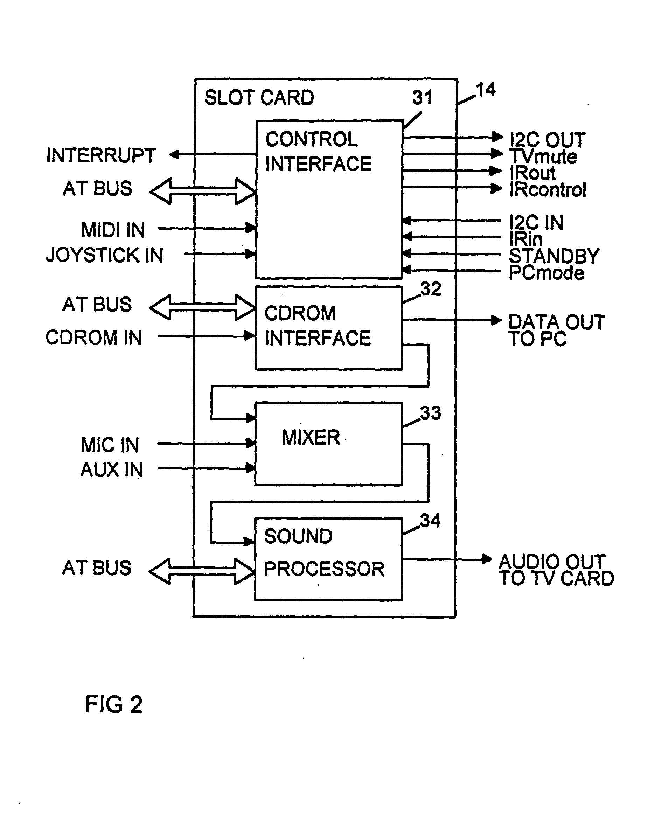

Referring to Figure 2, the slot card 14 includes a control interface 31, a CDROM interface 32, an audio mixer 33, and a sound processor circuit 34.

The mixer 33 receives the following signals: microphone input, auxiliary audio input, and the audio output from the CDROM interface 32. The mixer output is fed to the sound processor circuit 34. The sound processor circuit 34 is a standard 16-bit sound processor chip. The output of the sound processor circuit is a stereo audio output signal which is fed to the TV card 24. The sound processor circuit 34 and the CDROM interface 32 both interface with the AT bus from the PC motherboard.

The control interface 31 provides an interface between the AT bus, joystick and MIDI inputs, and the TV card. It comprises an 8-bit input port, and an 8-bit output port, and includes an interrupt generation circuit. Both ports are I/O mapped, allowing the PC to read or write data to or from these ports over the AT bus.

The output port produces the following signals which are supplied to the TV card:
- I²C out (data and clock): a standard I²C (inter integrated circuit) bus which is used to control the teletext circuit on the TV card.
- TVmute: when true, this mutes the TV sound to the audio amplifier. It is effective only in PC mode, and is ignored in TV mode.
- IRout: a simulated remote control signal which simulates the output of the infrared receiver.
- IRcontrol: this signal is used, as will be described, to control a multiplexer in the TV card which selects the source of the TV control signals. When false, the TV is controlled by the signal IRin from the remote control unit 25, received by the infrared receiver. When true, the TV is controlled by the simulated signal IRout.

The input port receives the following signals:
- I²C in (data and clock): a standard I²C bus, which is used to receive output signals from the teletext circuit.
- IRin: the remote control signal from the IR receiver in the front panel PCB 23.
- STANDBY: when true, indicates that the TV has switched to a standby mode.
- PCmode: when true, indicates that the system has switched into PC mode.

These last two signals (STANDBY and PCmode) both come from the TV microcontroller in the TV card 24.

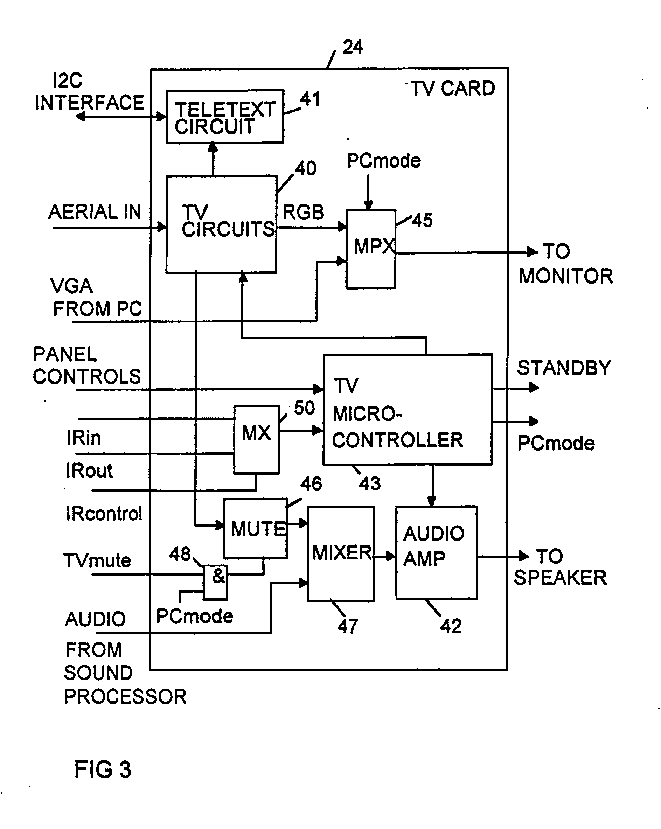

Referring to Figure 3, this shows the TV card 24 in detail.

The TV card includes conventional analog TV circuits 40 (comprising tuner, IF and analog decoder circuits), a teletext circuit 41, a stereo audio power amplifier 42, and a TV microcontroller 43.

The TV circuits 40 receive broadcast TV signals from an aerial socket, and produce output analog RGB (red, green, blue) and synch signals. The RGB and synch signals are fed to one input of an analog multiplexer 45, the other input of which receives analog VGA signals from the PC motherboard. The multiplexer is controlled by the PCmode signal from the TV microcontroller, such that when PCmode is true, the multiplexer selects the VGA (RGB) signal from the PC, and when PCmode is false, the multiplexer selects the RGB and synch signals from the TV circuit 40.

The TV circuits 40 also produce stereo audio signals, which are fed to the audio amplifier 42 by way of a muting circuit 46 and a mixer 47. The muting circuit is controlled by the output of an AND gate 48, which receives the TVmute signal from the control interface 31 on the slot card and the PCmode signal from the TV microcontroller. Thus, the TV sound is muted if both TVmute and PCmode are true. The mixer 47 combines the TV audio signal with the audio signal from the sound processor 34 on the slot card.

The teletext circuit 41 is connected to the I²C lines of the control interface 31, allowing it to communicate with the PC.

The TV microcontroller 43 receives control signals from the TV control buttons on the front panel, and also receives control signals from a multiplexer 50. One input of the multiplexer 50 receives the remote control signal IRin from the IR receiver, and the other input receives the simulated remote control signal IRout from the control interface 31 on the slot card. The multiplexer is controlled by the signal IRcontrol from the control interface 31 on the slot card, such that when IRcontrol is false, the signal IRin is selected, and when IRcontrol is true, the signal IRout is selected. In response to the control signals, the microcontroller issues tuning control signals to the TV circuits 40 and issues volume, balance, tone and muting signals to the audio amplifier 42. The microcontroller 43 also generates the STANDBY and PCmode signals referred to above.

The operation of the system in the PC and TV modes will now be described.

### PC Mode Operation

In this mode, the multiplexer 45 selects the VGA (RGB) signal from the PC, and so the VGA output from the PC is displayed on the monitor. Any sounds output from the sound processor are fed to the audio amplifier 42 by way of the mixer 47. The TV sound signal is also fed to the mixer 47, unless it is muted by the TVmute signal from the PC.

Also in this mode, the remote control signal IRin from the remote controller can be read by the PC, through the control interface, and this signal can then be used by software in the PC to simulate movement of the mouse or other pointer device, e.g. to control movement of a cursor on the display. More specifically, numeric keys 1-4, 6-9 on the controller are used to simulate mouse movement in one of eight directions, the central numeric key (5) simulates the left mouse button, and numeric key 0 simulates the right mouse button.

In PC mode, the teletext buttons on the remote controller act as control keys (review, stop, play, and fast forward) for the CDROM drive.

The system can be switched into TV mode by pressing the TV selection key on the remote controller.

### TV Mode Operation

In this mode, the multiplexer 45 selects the TV signals from the TV circuits 40, and so the TV picture is displayed on the monitor. The TV can be controlled either by using the buttons on the front panel 23, or by using the remote controller 25. Alternatively, the TV can be controlled by software in the PC, using the simulated remote control signal IRout.

The system can be switched into PC mode by pressing the PC key on the remote controller.

It should be noted that in the system described above, digitization of the TV signal, and subsequent conversion back to analog form, is avoided. This reduces cost, and improves TV picture quality.

## Claims

1. An integrated personal computer and television system comprising:
(a) a personal computer (12);
(b) television circuits (40) for receiving broadcast television signals;
(c) a display monitor (22);
(d) a hand-held remote control unit (25); and
(e) a remote control receiver (23) for receiving wireless remote control signals from the remote control unit (25);
(f) the system having a computer mode, in which the output of the personal computer (12) is displayed on the monitor (22), and a television mode, in which the output of the television circuits (40) is displayed on the monitor (22) and wherein, in the television mode, the received remote control signals control the television circuits (40), while in the computer mode, the received remote control signals are fed to the computer (12) ;
**characterised in that**:
(g) in the computer mode the remote signals are used to control movement of a cursor on the display monitor (22) in a plurality of directions, whereby the remote control unit acts as a simulated mouse or other pointer device for control of said cursor movement.

2. A system according to Claim 1 wherein the received remote control signals also control switching of the system between the television mode and the computer mode.

3. A system according to Claim 1 or 2 wherein said remote control unit (25) includes numeric keys 0-9, and wherein keys 1-4 and 6-9 are used for simulating movement of a mouse or other pointer device in eight different directions.

4. A system according to Claim 3 wherein keys 0 and 5 are used to simulate buttons on a mouse or other pointer device.

5. A system according to any preceding claim, wherein:
(a) the computer (12) produces an output VGA signal;
(b) the television circuits (40) decode the broadcast television signal by analog means to produce an analog TV signal; and
(c) the system further includes switching means (45) for selecting between said output VGA signal from the computer and said analog TV signal from the television circuits, for feeding directly to the monitor.

6. A system according to any preceding claim wherein said computer (12), said monitor (22), and said television circuits (40) are all housed in a single cabinet (10).

7. A system according to any preceding claim including a multiplexer (50) for selecting simulated remote control signals (IRout) from the computer (12) for controlling the television circuits (40), in place of control signals (IRin) received from the remote control receiver (23).

8. A system according to Claim 7 wherein the simulated remote control signals (IRout) are sent to the multiplexer (50) by way of a computer bus (20) and an I/O mapped control port (31) attached to the bus.

9. A system according to Claim 8 wherein the control port (31) also generates a control signal (IRcontrol) for controlling the multiplexer (50).

## Patentansprüche

1. Integriertes Personal-Rechner- und Fernseh-System, mit
(a) einem Personal-Rechner (12),
(b) Fernsehschaltungen (40) zur Aufnahme von Fernseh-Funksignalen,
(c) einem Sichtanzeige-Monitor (22),
(d) einem handgeführten Fernsteuergerät (25) und
(e) einem Fernsteuerempfänger (23) zum Empfangen von drahtlosen Fernsteuersignalen aus dem Fernsteuergerät (25),
(f) wobei das System einen Rechnerbetrieb, in dem der Ausgang des Personal-Rechners (12) auf dem Monitor (22) dargestellt wird, und einem Fernsehbetrieb, bei dem der Ausgang der Fernsehschaltungen (40) auf dem Monitor (22) dargestellt wird, umfasst und wobei im Fernsehbetrieb die empfangenen Fernsteuersignale die Fernsehschaltungen (40) steuern, während im Rechnerbetrieb die empfangenen Femsteuersignale dem Rechner (12) zugeführt werden,
**dadurch gekennzeichnet, dass**
(g) im Computerbetrieb die Femsteuersignale verwendet werden, um eine Verschiebung eines Cursors auf dem Sichtanzeige-Monitor (22) in einer Mehrzahl von Richtungen zu steuern, wobei die Fernsteuereinheit als eine simulierte Maus oder eine andere Zeigervorrichtung zur Steuerung der Cursor-Bewegung arbeitet.

2. System nach Anspruch 1, bei dem die empfangenen Fernsteuersignale ferner das Schalten des Systems zwischen dem Fernsehbetrieb und dem Rechnerbetrieb steuern.

3. System nach Anspruch 1 oder 2, bei dem das Fernsteuergerät (25) numerische Tasten 0 - 9 aufweist, und die Tasten 1 - 4 und 6 - 9 zum Simulieren der Bewegung einer Maus oder einer anderen Zeigervorrichtung in acht unterschiedlichen Richtungen verwendet werden.

4. System nach Anspruch 3, bei dem Tasten 0 und 5 verwendet werden, um Knöpfe auf einer Maus oder einer anderen Zeigervorrichtung zu simulieren.

5. System nach einem der vorausgehenden Ansprüche, bei dem
(a) der Rechner (12) ein Ausgangs-VGA-Signal erzeugt,
(b) die Fernsehschaltungen (40) das Fernseh-Übertragungssignal in einen analogen Wert decodieren, um ein analoges TV-Signal zu erzeugen, und
(c) das System ferner eine Schaltvorrichtung (45) zur Auswahl zwischen dem Ausgangs-VGA-Signal aus dem Rechner und dem analaogen TV-Signal aus den Fernsehschaltungen aufweist, um sie direkt dem Monitor zuzuführen.

6. System nach einem der vorausgehenden Ansprüche, bei dem der Rechner (12), der Monitor (22) und die Fernsehschaltungen (40) alle in einem einzigen Gehäuse (10) aufgenommen sind.

7. System nach einem der vorausgehenden Ansprüche, mit einem Multiplex (50) zum Auswählen simulierter Fernsteuersignale (IRout) aus dem Rechner (12) für die Steuerung der Fernsehschaltungen (40) anstelle von Steuersignalen (IRin), die von dem Fernsteuerempfänger (23) aufgenommen werden, aufweist.

8. System nach Anspruch 7, bei dem die simulierten Fernsteuersignale (IRout) an den Multiplexer (50) über einen Rechner-Bus (20) und einen I/O abgebildeten Steuer-Port (31), der mit dem Bus verbunden ist, geschickt werden.

9. System nach Anspruch 8, bei dem der Steuer-Port (31) ein Steuersignal (IRcontrol) zur Steuerung der Multiplexvorrichtung (50) erzeugt.

## Revendications

1. Système d'ordinateur personnel et de télévision intégré comprenant :
(a) un ordinateur personnel (12),
(b) des circuits de télévision (40) destinés à recevoir des signaux de télévision diffusés,
(c) un moniteur d'affichage (22),
(d) une unité de commande à distance portative (25), et
(e) un récepteur de commande à distance (23) destiné à recevoir des signaux de commande à distance sans fil de l'unité de commande à distance (25),
(f) le système comportant un mode d'ordinateur, dans lequel la sortie de l'ordinateur personnel (12) est affichée sur le moniteur (22), et un mode de télévision, dans lequel la sortie des circuits de télévision (40) est affichée sur le moniteur (22) et dans lequel, dans le mode de télévision, les signaux de commande à distance reçus commandent les circuits de télévision (40), alors que dans le mode d'ordinateur, les signaux de commande à distance reçus sont appliqués à l'ordinateur (12),
**caractérisé en ce que** :
(g) dans le mode d'ordinateur, les signaux de commande à distance sont utilisés pour commander le déplacement d'un curseur sur le moniteur d'affichage (22) dans une pluralité de directions, grâce à quoi l'unité de commande à distance agit comme une souris ou autre dispositif de pointeur simulé pour la commande dudit déplacement du curseur.

2. Système selon la revendication 1, dans lequel les signaux de commande à distance reçus commandent également le basculement du système entre le mode de télévision et le mode d'ordinateur.

3. Système selon la revendication 1 ou 2, dans lequel ladite unité de commande à distance (25) comprend des touches numériques 0 à 9, et dans lequel les touches 1 à 4 et 6 à 9 sont utilisées pour simuler le déplacement d'une souris ou autre dispositif de pointeur dans huit directions différentes.

4. Système selon la revendication 3, dans lequel les touches 0 et 5 sont utilisées pour simuler des boutons sur une souris ou autre dispositif de pointeur.

5. Système selon l'une quelconque des revendications précédentes, dans lequel :
(a) l'ordinateur (12) produit un signal de sortie de type VGA,
(b) les circuits de télévision (40) décodent le signal de télévision diffusé par un moyen analogique afin de produire un signal de télévision analogique, et
(c) le système comprend en outre un moyen de commutation (45) destiné à sélectionner entre ledit signal de sortie de type VGA provenant de l'ordinateur et ledit signal de télévision analogique provenant des circuits de télévision, en vue d'une application directe au moniteur.

6. Système selon l'une quelconque des revendications précédentes, dans lequel ledit ordinateur (12), ledit moniteur (22) et lesdits circuits de télévision (40) sont tous logés dans un seul coffret (10).

7. Système selon l'une quelconque des revendications précédentes, comprenant un multiplexeur (50) destiné à sélectionner des signaux de commande à distance simulés (IRout) provenant de l'ordinateur (12), afin de commander les circuits de télévision (40) à la place des signaux de commande (IRin) reçus du récepteur de commande à distance (23).

8. Système selon la revendication 7, dans lequel les signaux de commande à distance simulés (IRout) sont émis vers le multiplexeur (50) au moyen d'un bus d'ordinateur (20) et d'un port de commande mappé sur des entrées/sorties (31) rattaché au bus.

9. Système selon la revendication 8, dans lequel le port de commande (31) génère également un signal de commande (IRcontrol) destiné à commander le multiplexeur (50).
